# FASCICULE DE BREVET EUROPEEN

(11) **EP 4 436 847 B1**
(45) Date de publication et mention de la délivrance du brevet: **02.09.2026**
(21) Numéro de dépôt: 22835458.5
(22) Date de dépôt: 20.10.2022
(51) Int. Cl.: B60W 30/14, B60W 50/08

(54) **PROCÉDÉ D'AIDE À LA CONDUITE D'UN VÉHICULE AUTOMOBILE ET DISPOSITIF ET VÉHICULE ASSOCIÉ**
VERFAHREN ZUR UNTERSTÜTZUNG DES FAHRENS EINES KRAFTFAHRZEUGS UND ZUGEHÖRIGE VORRICHTUNG UND FAHRZEUG
METHOD FOR ASSISTING WITH DRIVING A MOTOR VEHICLE, AND ASSOCIATED DEVICE AND VEHICLE

(30) Priorité: 24.11.2021 FR 2112439
(43) Date de publication de la demande: 02.10.2024
(73) Titulaire: Stellantis Auto SAS, 78300 Poissy (FR)
(72) Inventeur: EL HANBALI, Hamza, Sidi Maarouf Casablanca, 20580 (MA); ET-THAQFY, Yassine, Sidi El Bernoussi Casablanca, 20620 (MA); LAHLOU, Zoubida, Lissasfa Casablanca, 20190 (MA); AIT ALI, Meriem, Casablanca, 20580 (MA)
(74) Mandataire: ESIP
(86) Numéro de dépôt international: PCT/FR2022/051975
(87) Numéro de publication internationale: WO 2023/094738

(56) Documents cités:
- DE-A1- 10 047 748
- DE-A1- 102017 208 583
- US-A1- 2020 148 201

## Description

L'invention concerne l'aide à la conduite d'un véhicule automobile.

Aujourd'hui, Il existe un certain nombre d'automatismes de conduite permettent une adaptation automatique (ou semi-automatique) de la vitesse ou de la trajectoire d'un véhicule en fonction de l'environnement du véhicule, à l'exemple des documents DE102017208583A1, US2020148201A1, DE10047748A1.

Il existe un besoin d'améliorer l'attractivité de ces automatismes.

Dans ce but, l'invention concerne un procédé d'aide à la conduite d'un véhicule selon la revendication 1.

Ainsi, les automatismes de conduite bénéficient de différents styles de conduite adaptées aux préférences de conduites ou au sexe (ou genre) du conducteur du véhicule que peut sélectionner le conducteur. Ainsi, l'utilisation de l'automatisme de conduite est rendue plus agréable et donc plus attractive.

Selon l'invention, le premier réseau de neurones et le deuxième réseau de neurones sont configurés pour que le premier réseau de neurones détermine, à partir d'une vitesse initiale et d'une vitesse de consigne, des données définissants une trajectoire ayant un jerk (appelé aussi à-coup, c'est à dire le taux de variation d'une accélération qui s'exprime en m^{.s-3}) maximum et une accélération maximum supérieure (par exemple en moyenne, par exemple sur la détermination de 50 données définissants une trajectoire) à ceux (i.e. : un jerk maximum et une accélération maximum) d'une trajectoire dont des données sont déterminées par le deuxième réseau de neurones à partir de la vitesse initiale et de la vitesse de consigne. Bien entendu, en variante, le premier réseau de neurones et le deuxième réseau de neurones peuvent avoir d'autre différences.

Ainsi, le premier réseau de neurones produit des automatismes de conduite plus dynamique que ceux produits par le deuxième réseau de neurones. Autrement dit, le premier réseau de neurones détermine des données définissant des trajectoires plus dynamiques que les trajectoires définies par les données produites par le deuxième réseau de neurones.

Par exemple, le premier réseau de neurones peut reproduire des comportement de conduite masculins et le deuxième réseau de neurones des comportements de conduite féminins.

Selon un mode de réalisation, l'étape de sélection est réalisée par l'intermédiaire d'une interface homme-machine (située dans l'habitacle) du véhicule. En variante, la clef de contact détermine le réseau de neurone actif.

La première vitesse initiale est par exemple la vitesse (instantanée) à laquelle roule le véhicule. Elle est connue de manière usuelle par le véhicule.

La première vitesse de consigne peut être inférieure ou supérieure à la première vitesse initiale.

Selon un mode de réalisation, le procédé comprend la détermination de la première trajectoire à partir des premières données.

Le procédé peut comprendre également la commande du véhicule (notamment de sa vitesse, notamment par l'intermédiaire de la commande de freinage et des gaz du véhicule) de manière que le véhicule réalise la première trajectoire.

Par exemple, la première vitesse de consigne peut être déterminée par :
- Une vitesse maximum autorisée sur une route sur laquelle le véhicule est en train de circuler (acquise par exemple par une caméra ou des moyens radio du véhicule), ou
- Une vitesse d'un autre véhicule précédent immédiatement le véhicule (acquise par exemple par une caméra ou un radar du véhicule), ou
- Une vitesse entrée (par le conducteur) par (par l'intermédiaire de) l'interface homme-machine du véhicule.

En variante, la première vitesse de consigne peut-être la vitesse que doit atteindre le véhicule pour passer une courbe sans danger.

Selon un mode de réalisation, les premières données comportent un premier jerk maximum et une première accélération maximum de la première trajectoire.

En variante, les premières données définissent complètement la première trajectoire. Par exemple, les premières données comportent une équation définissant la première trajectoire.

En variante, le type peut être reconnu à partir de la reconnaissance (par exemple réalisée par une caméra embarquée dans le véhicule) des panneaux (en bord de route) indiquant le type de route.

Selon un mode de réalisation, le type comprends : les routes communales, les routes départementales, les routes nationales et les autoroutes.

*Dm* est par exemple compris entre 1 et 50 secondes.

En variante, la première trajectoire peut être définie par une autre équation, par exemple un polynôme du quatrième degré.

*Dₘ* est déterminée de manière à ce que la première trajectoire ait une accélération en tout point (de la trajectoire) inférieure à l'accélération maximum. Pour cela, plusieurs trajectoires, avec des valeurs de *Dₘ* différentes, peuvent être engendrées jusqu'à ce que l'une d'elle respecte ce critère.

Les étapes précédentes sont réalisées par exemple par un dispositif électronique, par exemple, un ordinateur (ou un microprocesseur) à bord du véhicule.

Le premier réseau de neurones et le deuxième réseau de neurones sont par exemple compris dans le dispositif électronique et/ou comprennent par exemple un programme d'ordinateur ou/et des circuits électroniques.

Selon un mode de réalisation, préalablement à l'étape de sélection du réseau de neurone actif, le procédé comprend les étapes suivantes :
- Entrainement du premier réseau de neurones à partir de séquences de conduites pilotées par des conducteurs masculins,
- Entrainement du deuxième réseau de neurones à partir de séquences de conduites pilotées par des conducteurs féminins.

Par exemple, les séquences sont obtenues par l'enregistrement de trajectoires (entre deux instants où l'accélération est nulle ou en dessous d'un certain seuil), associée à l'accélération maximum et au jerk maximum de ces trajectoires sur un véhicule (lors de la conduite du véhicule).

Les étapes d'entrainement peuvent être mises en œuvre à bord d'autres véhicules que le véhicule. Le premier réseau de neurones et le deuxième réseau de neurones peuvent être ensuite déployés (autrement dit : installés) dans un grand nombre de véhicules, par exemple, plus de 1000 véhicules.

L'invention concerne également un programme d'ordinateur comprenant des instructions, exécutables par un microprocesseur ou un microcontroller, pour la mise en œuvre du procédé selon l'invention.

L'invention concerne aussi un dispositif électronique configuré pour mettre en œuvre les étapes du procédé selon l'invention.

L'invention concerne enfin un véhicule automobile comprenant le dispositif électronique.

On entend qu'un élément tel que le dispositif électronique ou un autre élément est « configuré pour » réaliser une étape ou une opération, ou qu'une étape ou une opération est réalisée par l'élément, par le fait que l'élément comporte des moyens pour (autrement dit « est conformé pour » ou « est adapté pour ») réaliser l'étape ou l'opération. Il s'agit préférentiellement de moyens électroniques, par exemple un programme d'ordinateur, des données en mémoire et/ou des circuits électroniques spécialisés.

D'autres caractéristiques et avantages de la présente invention apparaitront plus clairement à la lecture de la description détaillée qui suit comprenant des modes de réalisation de l'invention donnés à titre d'exemples nullement limitatifs et illustrés par les dessins annexés, dans lesquels :
[Fig. 1] représente un dispositif électronique d'un véhicule automobile dans un contexte selon un mode de mode de réalisation de l'invention.
[Fig. 2] représente le procédé de l'invention, selon un exemple de réalisation, mis en œuvre notamment par le dispositif électronique dans le contexte de la figure 1.

### Description détaillée d'un exemple de réalisation de l'invention

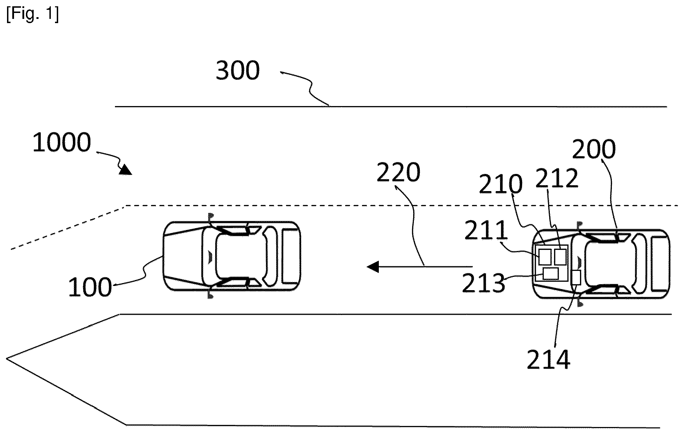

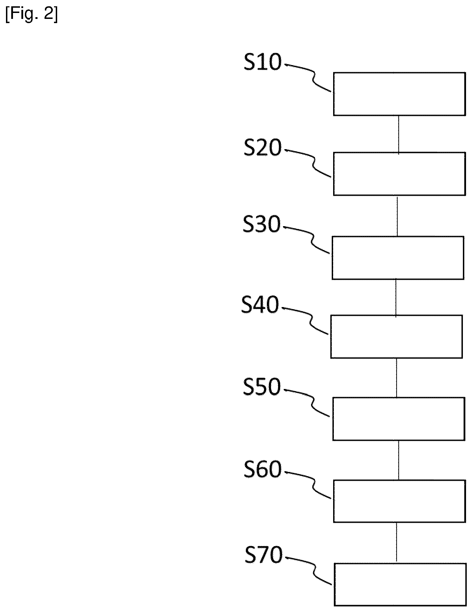

En référence aux figure 1 et 2, à l'étape S10, les étapes suivantes sont réalisées :
- Entrainement d'un premier réseau de neurones 211 à partir de séquences de conduites pilotées par des conducteurs masculins,
- Entrainement d'un deuxième réseau de neurones 212 à partir de séquences de conduites pilotées par des conducteurs féminins.

Par exemple, les séquences sont obtenues par l'enregistrement de trajectoires (entre deux instants où l'accélération est nulle ou en dessous d'un certain seuil), associée à l'accélération maximum et au jerk maximum de ces trajectoires sur un véhicule lors de la conduite du véhicule.

Par exemple, le premier réseau de neurones 211 est configuré pour déterminer, à partir d'une vitesse initiale et d'une vitesse de consigne, des données définissants une trajectoire ayant un jerk (appelé aussi à-coup, c'est à dire le taux de variation d'une accélération qui s'exprime en m.^{s-3}) maximum et une accélération maximum supérieure (par exemple en moyenne, par exemple sur la détermination de 50 données définissants une trajectoire) à ceux (i.e. : un jerk maximum et une accélération maximum) d'une trajectoire dont des données sont déterminées par le deuxième réseau de neurones 212 à partir de la vitesse initiale et de la vitesse de consigne.

Les étapes d'entrainement peuvent être mises en œuvre à bord de premiers véhicules. Le premier réseau de neurones 211 et le deuxième réseau de neurones 212 peuvent être ensuite déployés (autrement dit : installés) dans un grand nombre de véhicules, par exemple, plus de 1000 véhicules, différents des premiers véhicules.

Ainsi, à l'étape S20, le premier réseau de neurones 211 et le deuxième réseau de neurones 212 sont compris dans le dispositif électronique 210 (par exemple, un ordinateur ou un microprocesseur), dans un contexte 1000, notamment à bord du véhicule automobile 200 qui circule sur une route 300 derrière un véhicule 100.

Le premier réseau de neurones 211 et le deuxième réseau de neurones 212 comprennent par exemple un programme d'ordinateur ou/et des circuits électroniques.

A l'étape S30, le conducteur du véhicule 200 sélectionne un réseau de neurones actif 211 parmi le premier réseau de neurones 211 et le deuxième réseau de neurones 212.

Selon un mode de réalisation, l'étape de sélection est réalisée par l'intermédiaire d'une interface homme-machine 214 (située dans l'habitacle) du véhicule 200.

A l'étape S40, le dispositif électronique 210 acquiert une première vitesse initiale et une première vitesse de consigne.

La première vitesse initiale est par exemple la vitesse (instantanée) à laquelle roule le véhicule 200. Elle est connue de manière usuelle par le véhicule 200 (c'est la vitesse acquise par le compteur de vitesse).

La première vitesse de consigne peut être déterminée par une vitesse d'un autre véhicule 100 précédent immédiatement le véhicule 200 (acquise par exemple par une caméra ou un radar du véhicule 200).

Dans l'exemple de la figure 1, le véhicule 100 à ralenti à 50 km/h (kilomètres par heure) alors que le véhicule 200 roule à 80 km/h derrière le véhicule 100. Le véhicule 200 doit adapter sa vitesse à celle du véhicule 100 en passant de 80 km/h, qui est la première vitesse initiale, à 50 km/h, qui est la première vitesse de consigne.

A l'étape S50, le réseau de neurones actif 211 détermine des premières données définissants une première trajectoire durant laquelle le véhicule 200 passe de la première vitesse initiale à la première vitesse de consigne

Par exemple, les premières données comportent un premier jerk maximum et une première accélération maximum de la première trajectoire.

Par exemple, le réseau de neurones actif 211 détermine les premières données à partir d'un type de la route 300 sur laquelle se trouve le véhicule 200. Le type est par exemple déterminé à partir de données cartographiques et d'une position du véhicule 200 obtenue par exemple par un système de positionnement du véhicule 213. Le type comprends : les routes communales, les routes départementales, les routes nationales et les autoroutes.

A l'étape S60, la première trajectoire est obtenue par le dispositif 310 à partir de l'équation suivante : $\begin{matrix}P \left(t\right) = {C}_{5} ∗ {t}^{5} + {C}_{4} ∗ {t}^{5} + {C}_{3} ∗ {t}^{3} + {C}_{2} ∗ {t}^{2} + {C}_{1} ∗ t + {C}_{0} , avec {C}_{0} = {P}_{init} , {C}_{1} = {V}_{init} , \\ {C}_{2} = \frac{{A}_{init}}{2} , {C}_{3} = \frac{{J}_{init}}{6} , {C}_{4} = \frac{\left({V}_{consigne}-{V}_{init}\right) - \frac{\left({A}_{consigne}-{A}_{init}\right)}{4} ∗ {D}_{m} - \frac{{J}_{init}}{4} ∗ {D}_{m}^{2} - {A}_{init} ∗ {D}_{m}}{{D}_{m}^{3}} , \\ {C}_{5} = \frac{- 3 ∗ \left({V}_{consigne}-{V}_{init}\right) + \left({A}_{consigne}-{A}_{init}\right) ∗ {D}_{m} + \frac{{J}_{init}}{2} ∗ {D}_{m}^{2} + 3 ∗ {A}_{init} ∗ {D}_{m}}{5 ∗ {D}_{m}^{4}} ,\end{matrix}$ et où :
- P(t) défini une position du véhicule 200 exprimée en mètres, notés m, en fonction du temps t, exprimé en secondes, notées s, dans la direction et le sens 120 de circulation du véhicule 200,
- *Pᵢₙᵢₜ* est une position du véhicule 200 lorsque le véhicule 200 se trouve à la première vitesse initiale, exprimée en m
- *Vᵢₙᵢₜ* est la première vitesse initiale, en m.s⁻¹.
- *Aᵢₙᵢₜ* est l'accélération maximum, en m.s⁻².
- *Aᵢₙᵢₜ* est le jerk maximum, en m.s⁻³.
- *V_{consigne}* est la première vitesse de consigne, en m.s⁻¹.
- *A_{consigne}* est l'accélération de consigne en m.s⁻², généralement égale à 0,(par exemple il s'agit de l'accélération lorsque le véhicule est à la vitesse *V_{consigne}*),
- *Dₘ* est une durée (en s) s'écoulant entre un premier instant où le véhicule 200 se trouve à la première vitesse initiale et un deuxième instant où le véhicule 200 se trouve à la première vitesse de consigne.

*Dm* est par exemple compris entre 1 et 50 secondes.

*Dₘ* est déterminée de manière à ce que la première trajectoire ait une accélération en tout point (de la trajectoire) inférieure à l'accélération maximum. Pour cela, plusieurs trajectoires, avec des valeurs *Dₘ* différentes, peuvent être engendrées jusqu'à ce que l'une d'elle respecte ce critère.

En variante, les premières données définissent complètement la première trajectoire. Par exemple, les premières données comportent une équation définissant la trajectoire.

A l'étape S70, le dispositif 210 commande du véhicule 200 (notamment sa vitesse, notamment par l'intermédiaire de la commande de freinage et des gaz du véhicule 200) de manière que le véhicule 200 réalise la première trajectoire.

## Revendications

1. Procédé d'aide à la conduite d'un véhicule automobile (200), le véhicule automobile (200) comprenant un premier réseau de neurones électronique (211) et un deuxième réseau de neurones électronique (212) comprenant les étapes suivantes :
- Sélection (S30) d'un réseau de neurones actif (211) parmi le premier réseau de neurones (211) et le deuxième réseau de neurones (212),
- Acquisition (S40) d'une première vitesse initiale et d'une première vitesse de consigne,
- Détermination (S50), par le réseau de neurones actif (211), de premières données définissants une première trajectoire durant laquelle le véhicule (200) passe de la première vitesse initiale à la première vitesse de consigne,
le premier réseau de neurones (211) étant configuré pour déterminer, à partir d'une vitesse initiale et d'une vitesse de consigne, des données définissants une trajectoire ayant un jerk maximum et une accélération maximum supérieure à ceux d'une trajectoire dont des données sont déterminées par le deuxième réseau de neurones (212) à partir de la vitesse initiale et de la vitesse de consigne,
le réseau de neurones actif (211) déterminant les premières données à partir d'un type de la route (300) sur laquelle se trouve le véhicule obtenue à partir de données cartographiques et d'une position du
véhicule (200), et dans lequel la première trajectoire est définie par l'équation suivante : $\begin{matrix}P \left(t\right) = {C}_{5} ∗ {t}^{5} + {C}_{4} ∗ {t}^{5} + {C}_{3} ∗ {t}^{3} + {C}_{2} ∗ {t}^{2} + {C}_{1} ∗ t + {C}_{0} , avec {C}_{0} = {P}_{init} , {C}_{1} = {V}_{init} , \\ {C}_{2} = \frac{{A}_{init}}{2} , {C}_{3} = \frac{{J}_{init}}{6} , {C}_{4} = \frac{\left({V}_{consigne}-{V}_{init}\right) - \frac{\left({A}_{consigne}-{A}_{init}\right)}{4} ∗ {D}_{m} - \frac{{J}_{init}}{4} ∗ {D}_{m}^{2} - {A}_{init} ∗ {D}_{m}}{{D}_{m}^{3}} , \\ {C}_{5} = \frac{- 3 ∗ \left({V}_{consigne}-{V}_{init}\right) + \left({A}_{consigne}-{A}_{init}\right) ∗ {D}_{m} + \frac{{J}_{init}}{2} ∗ {D}_{m}^{2} + 3 ∗ {A}_{init} ∗ {D}_{m}}{5 ∗ {D}_{m}^{4}} ,\end{matrix}$ et où :
- P(t) défini une position du véhicule (200), exprimée en mètres notés m, en fonction du temps t, exprimé en secondes, notées s,
- *Pᵢₙᵢₜ* est une position du véhicule (200) lorsque le véhicule (200) se trouve à la première vitesse initiale, exprimée en m
- *Vᵢₙᵢₜ* est la première vitesse initiale, en m.s⁻¹,
- *Aᵢₙᵢₜ* est l'accélération maximum, en m.s⁻².
- *Aᵢₙᵢₜ* est le jerk maximum, en m.s⁻³.
- *V_{consigne}* est la première vitesse de consigne, en m.s⁻¹.
- *A_{consigne}* est l'accélération de consigne en m.s⁻², généralement égale à 0,
- *Dₘ* est une durée en s, s'écoulant entre un premier instant où le véhicule (200) se trouve à la première vitesse initiale et un deuxième instant où le véhicule (200) se trouve à la première vitesse de consigne.

2. Procédé d'aide à la conduite selon la revendication précédente dans lequel la première vitesse de consigne peut être déterminée par :
- Une vitesse maximum autorisée sur une route (300) sur laquelle le véhicule (200) est en train de circuler, ou
- Une vitesse d'un autre véhicule (100) précédent immédiatement le véhicule (200), ou
- Une vitesse entrée par l'interface homme-machine (214) du véhicule (200).

3. Procédé d'aide à la conduite selon l'une quelconque des revendications précédentes dans lequel les premières données comportent un premier jerk maximum et une première accélération maximum de la première trajectoire.

4. Procédé d'aide à la conduite selon l'une quelconque des revendications précédentes dans lequel, préalablement à l'étape de sélection du réseau de neurone actif, le procédé comprend les étapes suivantes :
- Entrainement (S10) du premier réseau de neurones (211) à partir de séquences de conduites pilotées par des conducteurs masculins,
- Entrainement (S10) du deuxième réseau de neurones (212) à partir de séquences de conduites pilotées par des conducteurs féminins.

5. Programme d'ordinateur comprenant des instructions qui, lorsque le programme est exécuté par un microprocesseur ou un microcontroller, conduisent celui-ci à mettre en œuvre la méthode selon l'une quelconque des revendications 1 à 4.

6. Dispositif électronique (210) configuré pour mettre en œuvre les étapes du procédé selon l'une quelconque des revendications 1 à 4.

7. Véhicule automobile (200) comprenant le dispositif électronique (210) selon la revendication précédente.

## Patentansprüche

1. Verfahren zur Unterstützung des Fahrens eines Kraftfahrzeugs (200), wobei das Kraftfahrzeug (200) ein erstes elektronisches Neuronennetz (211) und ein zweites elektronisches Neuronennetz (212) umfasst, das die folgenden Schritte umfasst:
- Auswahl (S30) eines aktiven neuronalen Netzwerks (211) aus dem ersten neuronalen Netzwerk (211) und dem zweiten neuronalen Netzwerk (212),
- Erfassung (S40) einer ersten Anfangsgeschwindigkeit und einer ersten Sollgeschwindigkeit,
- Bestimmung (S50) von ersten Daten durch das aktive neuronale Netzwerk (211), die eine erste Bahn definieren, während der das Fahrzeug (200) von der ersten Anfangsgeschwindigkeit zur ersten Sollgeschwindigkeit wechselt,
wobei das erste neuronale Netzwerk (211) so konfiguriert ist, dass es aus einer Anfangsgeschwindigkeit und einer Sollgeschwindigkeit Daten bestimmt, die eine Flugbahn mit einem maximalen JERK und einer maximalen Beschleunigung definieren, die größer sind als die einer Flugbahn, deren Daten vom zweiten neuronalen Netzwerk (212) aus der Anfangsgeschwindigkeit und der Sollgeschwindigkeit bestimmt werden,
Das aktive neuronale Netzwerk (211), das die ersten Daten aus einem Typ der Straße (300) bestimmt, auf der sich das Fahrzeug befindet, erhalten aus Kartendaten und einer Position des Fahrzeugs (200), und wobei der erste Pfad durch die folgende Gleichung definiert ist: $\begin{matrix}P \left(t\right) = {C}_{5} ∗ {t}^{5} + {C}_{4} ∗ {t}^{5} + {C}_{3} ∗ {t}^{3} + {C}_{2} ∗ {t}^{2} + {C}_{1} ∗ t + {C}_{0} , mit {C}_{0} = {P}_{init} , {C}_{1} = {V}_{init} , \\ {C}_{2} = \frac{{A}_{init}}{2} , {C}_{3} = \frac{{J}_{init}}{6} , {C}_{4} = \frac{\left({V}_{consigne}-{V}_{init}\right) - \frac{\left({A}_{consigne}-{A}_{init}\right)}{4} ∗ {D}_{m} - \frac{{J}_{init}}{4} ∗ {D}_{m}^{2} - {A}_{init} ∗ {D}_{m}}{{D}_{m}^{3}} , \\ {C}_{5} = \frac{- 3 ∗ \left({V}_{consigne}-{V}_{init}\right) + \left({A}_{consigne}-{A}_{init}\right) ∗ {D}_{m} + \frac{{J}_{init}}{2} ∗ {D}_{m}^{2} + 3 ∗ {A}_{init} ∗ {D}_{m}}{5 ∗ {D}_{m}^{4}}\end{matrix}$ und wobei:
- P(t) eine Position des Fahrzeugs (200) in m als Funktion der Zeit t in Sekunden als s definiert,
- *_{Pinit}* ist eine Position des Fahrzeugs (200) bei der ersten Anfangsgeschwindigkeit des Fahrzeugs (200) in m
- *_{Vinit}* ist die erste Anfangsgeschwindigkeit in m.s⁻¹,
- *_{So}* ist die maximale Beschleunigung in m.s⁻².
- *_{So}* ist das Maximum Jerk, in m.s⁻³.
- *_{Vconsigne}* ist die erste Sollgeschwindigkeit in m.s⁻¹.
- *_{Aconsigne}* ist die Sollbeschleunigung in m.s⁻², normalerweise gleich 0,
- *_{Dm}* ist eine Zeit in s, die zwischen einem ersten Zeitpunkt, an dem sich das Fahrzeug (200) mit der ersten Anfangsgeschwindigkeit befindet, und einem zweiten Zeitpunkt, an dem sich das Fahrzeug (200) mit der ersten Sollgeschwindigkeit befindet, verstreicht.

2. Fahrunterstützungsverfahren nach dem vorhergehenden Anspruch, wobei die erste Sollgeschwindigkeit bestimmt werden kann durch:
- Höchstgeschwindigkeit auf einer Straße (300), auf der das Fahrzeug (200) fährt, oder
- einer Geschwindigkeit eines anderen Fahrzeugs (100) unmittelbar vor dem Fahrzeug (200) oder
- Eine Geschwindigkeit, die über die Mensch-Maschine-Schnittstelle (214) des Fahrzeugs (200) eingegeben wird.

3. Fahrunterstützungsverfahren nach einem der vorhergehenden Ansprüche, bei dem die ersten Daten einen ersten Maximaljerk und eine erste Maximalbeschleunigung der ersten Bahn umfassen.

4. Fahrunterstützungsverfahren nach einem der vorhergehenden Ansprüche, wobei das Verfahren vor dem Schritt des Auswählens des aktiven Neuronennetzes die folgenden Schritte umfasst:
- Antrieb (S10) des ersten neuronalen Netzwerks (211) aus von männlichen Leitern gesteuerten Leitungssequenzen,
- Antrieb (S10) des zweiten Neuronennetzes (212) aus femininingeführten Leitungssequenzen.

5. Computerprogramm, das Befehle umfasst, die, wenn das Programm von einem Mikroprozessor oder einem Mikrocontroller ausgeführt wird, diesen veranlassen, das Verfahren nach einem der Ansprüche 1 bis 4 auszuführen.

6. Elektronische Vorrichtung (210), die so konfiguriert ist, dass sie die Schritte des Verfahrens nach einem der Ansprüche 1 bis 4 ausführt.

7. Kraftfahrzeug (200) mit der elektronischen Vorrichtung (210) nach dem vorhergehenden Anspruch.

## Claims

1. Method for assisting in driving a motor vehicle (200), wherein the motor vehicle (200) comprises a first electronic neurone network (211) and a second electronic neurone network (212) comprising:
- Selection (S 30) of an active neurone network (211) comprising the first neurone network (211) and the second neurone network (212),
- Acquisition (S 40) of a first initial speed and a first setpoint speed,
- Determination (S 50), by the active neurone network (211), of first data defining a first trajectory during which the vehicle (200) passes from the first initial speed to the first setpoint speed,
the first neurone network (211) being configured to determine, from an initial speed and a setpoint speed, data defining a trajectory having a maximum jerk and a maximum acceleration greater than those of a trajectory whose data are determined by the second neurone network (212) from the initial speed and the setpoint speed,
the active neurone network (211) determining the first data from a type of the roadway (300) on which the vehicle is located obtained from map data and a position of the vehicle (200), and in which the first trajectory is defined by the equation: $\begin{matrix}P \left(t\right) = {C}_{5} ∗ {t}^{5} + {C}_{4} ∗ {t}^{5} + {C}_{3} ∗ {t}^{3} + {C}_{2} ∗ {t}^{2} + {C}_{1} ∗ t + {C}_{0} , with {C}_{0} = {P}_{init} , {C}_{1} = {V}_{init} , \\ {C}_{2} = \frac{{A}_{init}}{2} , {C}_{3} = \frac{{J}_{init}}{6} , {C}_{4} = \frac{\left({V}_{consigne}-{V}_{init}\right) - \frac{\left({A}_{consigne}-{A}_{init}\right)}{4} ∗ {D}_{m} - \frac{{J}_{init}}{4} ∗ {D}_{m}^{2} - {A}_{init} ∗ {D}_{m}}{{D}_{m}^{3}} , \\ {C}_{5} = \frac{- 3 ∗ \left({V}_{consigne}-{V}_{init}\right) + \left({A}_{consigne}-{A}_{init}\right) ∗ {D}_{m} + \frac{{J}_{init}}{2} ∗ {D}_{m}^{2} + 3 ∗ {A}_{init} ∗ {D}_{m}}{5 ∗ {D}_{m}^{4}}\end{matrix}$ and where:
- P(t) defines a position of the vehicle (200), expressed in metres denoted m, as a function of time t, expressed in seconds, denoted s,
- *_{Pinit}* is a position of the vehicle (200) when the vehicle (200) is at the first initial speed, expressed in m
- *_{Vinit}* is the first initial speed, in m.s⁻¹,
- *_{Thus}* is the maximum acceleration, in m.s⁻².
- *_{So it}* is the maximum jerk, in m.s⁻³.
- *_{Vsetpoint}* is the first setpoint speed, in m.s⁻¹.
- *_{Asetpoint}* is the setpoint acceleration in m.s⁻², generally equal to 0,
- *_{Dm}* is a duration in s, elapsing between a first instant when the vehicle (200) is at the first initial speed and a second instant when the vehicle (200) is at the first set speed.

2. Method for assisting driving according to previous claim, wherein the first setpoint speed can be determined by:
- A maximum permitted speed on a highway (300) on which the vehicle (200) is in train to travel, or
- A speed of another vehicle (100) immediately previous the vehicle (200), or
- A speed entry through the man-machine interface (214) of the vehicle (200).

3. Method for assisting driving according to claim 1, wherein the first data comprises a first maximum jerk and a first maximum acceleration of the first trajectory.

4. Driving aid method according to claim 1, wherein, prior to the step of selecting the active neurone network, the method comprises the previous steps:
- Driving (S 10) the first network of neurones (211) from sequences of conducts driven by male conductors,
- Driving (S 10) the second network of neurones (212) from sequences of conductors driven by female conductors.

5. Computer plan comprising instructions which, when the plan is executed by a microprocessor or a microcontroller, lead the latter to implement the method according to any one of claims 1 to 4.

6. Electronic device (210) configured to implement the steps of the method according to any one of claims 1 to 4.

7. Motor vehicle (200) comprising the electronic device (210) according to the previous claim.
